Europäisches Patentamt

European Patent Office

Office européen des brevets

(11) Publication number: **0 181 155**
**B1**

## EUROPEAN PATENT SPECIFICATION

(45) Date of publication of patent specification: **19.09.90**

(21) Application number: **85307879.8**

(22) Date of filing: **31.10.85**

(51) Int. Cl.⁵: **G 01 N 21/47**, G 01 N 21/55,
G 01 N 33/34, G 01 N 21/86,
G 01 J 3/46, G 01 N 21/25

(54) **System for measuring the colour of a material.**

(30) Priority: **06.11.84 US 668761**

(43) Date of publication of application:
**14.05.86 Bulletin 86/20**

(45) Publication of the grant of the patent:
**19.09.90 Bulletin 90/38**

(84) Designated Contracting States:
**DE FR GB IT SE**

(56) References cited:
**GB-A-2 066 452**
**US-A-3 455 637**
**US-A-3 476 482**
**US-A-3 936 189**

(73) Proprietor: **MEASUREX CORPORATION**
**One Results Way**
**Cupertino, California 95014 (US)**

(72) Inventor: **Alguard, Mark**
**1020 Waverley**
**Palo Alto California 94301 (US)**
Inventor: **Howarth, John J.**
**15491 Winchester Boulevard**
**Monte Sereno California 95030 (US)**

(74) Representative: **Atkinson, Peter Birch et al**
**MARKS & CLERK Suite 301 Sunlight House Quay Street**
**Manchester M3 3JY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present embodiment concerns a system and process for measuring the color of a material such as a sheet of paper.

During the production of many materials, the color of the material must be measured and controlled. For example, during the production of liquids such as paint or during the production of sheet materials such as plastics or paper, certain pigments are added to a base material to provide color, and the amount of each pigment must be carefully controlled to insure that the color is within specified standards.

U.S. Patent 3,936,189 to De Remigis teaches a system for continuously monitoring the color of a moving sheet of paper. According to the patent an optical head includes a light integrating sphere for directing light from a source onto the web, and a plurality of sensing units are mounted in the upper portion of the sphere. On the opposite side of the sheet from the sensing unit is mounted an optical shoe providing black and white backgrounds. The black and white backgrounds are arranged to permit one or the other to be used to back the sheet during measurement of the color. The white background is produced by applying a white stripe to a quartz shoe.

We have found that systems such as those described in the patent using a white background in the form of paint or similar material can be inadequate for backing certain papers. That is, the measured color of a sheet of paper backed with a white standard such as white paint can vary significantly from the actual color of the sheet of paper.

An object of the present invention is to provide a means for measuring the color of a material backed by a standard to provide a highly accurate measurement of the color.

According to a first aspect of the present invention there is provided a system for measuring the color of a sample material comprising:

(a) means located on a first side of the sample for illuminating the sample material;

(b) sensor means located on the first side of the sample material for receiving light from the sample material;

(c) means for measuring the intensities of predetermined frequencies of light received by the sensor; and

(d) backing means on the second side of the sample material for reflecting light which has passed through the sample material back toward the sample material, characterised in that said backing material includes backing material which consists of substantially the same material as the sample material, the backing material has substantially 100% reflectance in all parts of the visible spectrum, and the backing material has substantially the same scattering coefficient as the sample material.

According to a second aspect of the present invention there is provided a system for measuring the color of a sample material comprising:

(a) means located in a first side of the sample for illuminating the sample material;

(b) sensor means located on the first side of the sample material for receiving light from the sample material;

(c) means for measuring the intensities of predetermined frequencies of light received by the sensor; and

(d) backing means on the second side of the sample material for reflecting light which has passed through the sample material back toward the sample material, characterised in that said backing means includes backing material which consists of substantially the same material, the backing material is of a target color, and the backing material has substantially the same scattering coefficient as the sample material.

According to a third aspect of the present invention there is provided a process for measuring the color of a sample material comprising:

(a) illuminating the sample material from a first side thereof;

(b) sensing on said first side light received from the sample material;

(c) determining the intensities of predetermined frequencies of sensed light; and

(d) reflecting light which has passed through the sample material back toward the sample material with means provided on the second side of the sample material, characterised in that said backing means includes backing material which consists of substantially the same material as the sample material, the backing material has substantially 100% reflectance in all parts of visible spectrum, and the backing material has substantially the same scattering coefficient as the sample material.

According to a fourth aspect of the present invention there is provided a process for measuring the color of a sample material comprising:

(a) illuminating the sample material from a first side thereof;

(b) sensing on said first side light received from the sample material;

(c) determining the intensities of predetermined frequencies of sensed light; and

(d) reflecting light which has passed through the sample material back toward the sample material with means provided on the second side of the sample material, characterised in that said backing means includes backing material which consists of substantially the same material, the backing material is of a target color, and the backing material has substantially the same scattering coefficient as the sample material.

The invention will be described, by way of example only, with reference to the accompanying drawings in which:—

Figure 1 is a schematic illustration of the present embodiment.

Figure 2 is a schematic illustration of one part of the present embodiment shown in Figure 1.

Figure 3 is another view of the part shown in Figure 2.

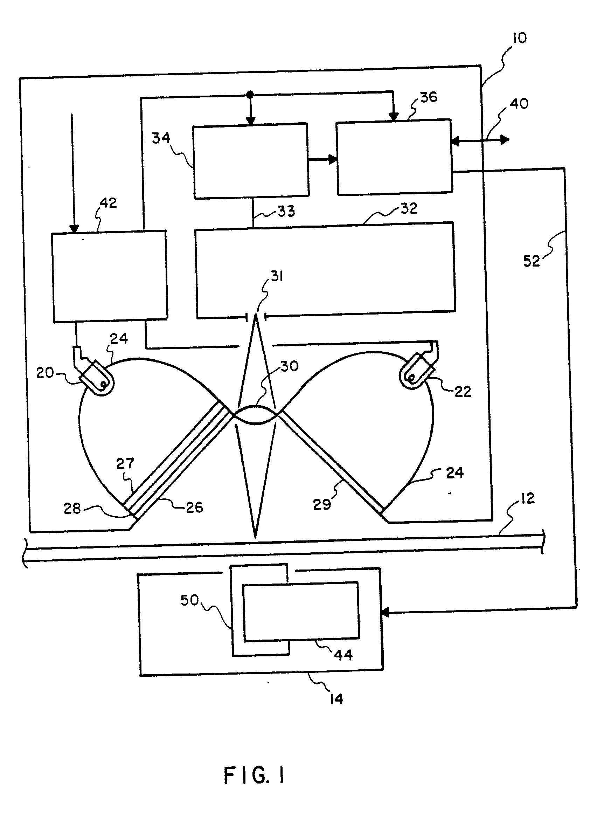

The embodiment shown in Figure 1 includes a housing 10 which in practice can be mounted above a moving sheet of paper 12 for scanning back and forth across the sheet during the production of the paper. A second housing 14 is mounted to the side of the sheet of paper opposite the housing 10 and is constructed and arranged to move with the housing 10 so that the two housings 10 and 14 remain in alignment. This type of scanning system is conventional and is taught, for example, in U.S. Patent 3,757,122.

Means for illuminating the sheet 12 is provided within the housing 10. The illumination means includes two light bulbs 20 and 22. The first light bulb 20 is a tungsten halide type to produce light in the visible range. The second light bulb 22 produces ultraviolet light. The light bulbs 20 and 22 are mounted in reflectors 24 which direct the light from the bulbs toward the sheet of paper 12. A plurality of filters are mounted in the reflectors 24. The filter 26 corrects the light from the bulb 20 to approximate C.I.E. illuminant "C", and the filter 27 absorbs some heat from the bulb 20 to prevent overheating of the filter 26. An air gap 28 is formed between filters 26 and 27. The filter 29 is a band-pass filter so that the light passing therethrough when added to the approximate C.I.E. illuminant "C" together produce light approximating C.I.E. illuminant $D_{65}$.

A lens 30 is mounted between the reflectors 24 for receiving light from the sheet of paper 12. The lens 30 is constructed so that light leaving a well-defined area on the paper is focused on the entrance slit 31 of spectral analyzer 32. The spectral analyzer 32 is conventional and includes a diffraction grating to break the light from lens 32 into its component colors. The spectral analyzer 32 also includes a diode array to measure the intensity of various, selected frequencies of the light from the diffraction grating. The diode array, not shown, converts the intensities of the light at various frequencies to electrical signals which are transmitted to preamplifier 34 by line 33. Electrical signals from preamplfifier 34 are transmitted to electronic circuitry including a microprocessor 36 to process information concerning the intensities of light at various frequencies and provide an output to a computer, not shown, via line 40.

A power supply 42 receives electrical current from an outside source and provides power to the light bulbs 20 and 22 as well as to the preamplifier 34 and the microprocessor 36.

The second housing 14 encloses stepper motor 44 and a backing system 50 which will be described hereinafter. The stepper motor receives instructions via electrical signals from microprocessor 36 by line 52.

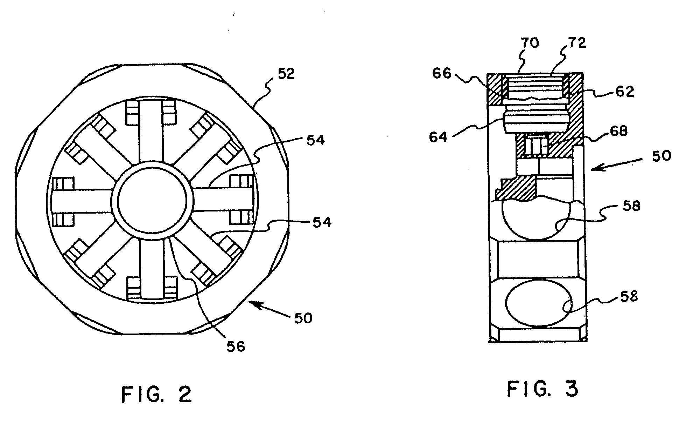

Figures 2 and 3 show the backing system 50 in further detail. The backing system includes a generally octagonal support member 52 which has eight spokes 54. Near the center of the support member 52 the spokes are coupled to a cylindrical member which in turn is coupled to the stepper motor 44 so that the stepper motor can operate to rotate the backing system 50 about its central axis. The support member also includes eight cylindrical ports 58 to accommodate containers 60.

With reference to Figure 3, each of the eight containers 60 includes a hollow, generally cylindrical body 62 having a lower portion 64 shaped to fit into a port 58. The body 62 is hollow to accommodate a plunger 66 which is coupled to a rod 68 by a spring, not shown. The container 60 also includes a quartz plate 70 mounted at the upper end of the body 62. The plunger 66 fits within the upper end of the body 62 to slide therein so that a plurality of sheets of paper in the form of a pad 72 can be located between the upper end of the plunger 66 and the quartz plate 70. When the pad 72 is inserted in the container 60, and the counter inserted in the support member 52, the lower end of the rod 68 contacts the support member 52 so that as pressure is applied downwardly on the counter 60 the spring between the rod 68 and the plunger 66 applies force upwardly on the pad 72 thereby forcing the pad against the quartz plate 70. Locking means, not shown, can be utilized in conjunction with the container 60 to hold it in place in the support member 52.

Some of the containers 60 can contain different materials in place of the pad 72. Thus the support member 52 can be rotated by the stepper motor under the control of the microprocessor 36 so that when different grades of paper are being manufactured different samples are used to back the material. Also, certain standard materials can be cserted in the container 60. When standardization is required the stepper motor can rotate the support member 52 so that the appropriate standard is located beneath the housing 10.

In operation, light from the bulbs 20 and 22 impinges upon the sheet of paper 12. Some of the light is reflected directly back to the lens 30 while some of the light passes through the paper to be reflected by the material in the container 60. Light reflected from the material in the container in part returns through the paper, and some of that light is collected by the lens 30.

We have found that the use of proper materials to form the pad 72 is crucial. The pad 72 should be composed of a plurality of sheets of paper so that the pad is at least about 1.5 mm (one-sixteenth inch) thick. It is important that a sufficient number of sheets be used so that the addition of sheets does not affect the optical properties of the pad.

In a paper mill which manufactures only a few different colors of paper, a plurality of pads 72 should be produced from standard sheets of paper having exactly the colors which the mill wishes to produce. These standard pads should be stored under proper conditions to insure that the color and other characteristics of the paper do not deteriorate, and when it is desired to measure the color of paper being produced, the pad having the target color, i.e. the color which the paper being produced is desired to have, is used to back the sample paper 12 when it is measured. We have found that the closer the color of the sample paper 12 to the standard sheets forming the pad 72, the more accurately our system measures the color of the sample 12.

However, if the mill manufactures many different colors of paper, it may not be practical to change the backing pad each time a different target color is desired. In this case, we have found that the use of white paper to form the pad 72 can give satisfactory results. By white paper, we mean paper which has substantially 100% reflectance of light in all parts of the visible spectrum. Thus, in measuring colored paper, i.e. paper which does not reflect all colors equally, the pad reflects substantially more light than the sample paper.

In the case of either a colored pad or a white pad, we have found that it is important that the standard sheets forming the pad 72 have substantially the same characteristics as the sample sheet 12. In particular, the scattering coefficients, $\sigma$, of the two types of sheets should be substantially the same. For example, if the sample 12 was made from groundwood pulp the standard sheets should likewise have been made from groundwood pulp, and if the sample 12 was made from chemical pulp the standard sheets should also have been. Also, it is preferable that the absorption coefficients, k and the degrees of fluorescence of the two types of sheets should be as nearly the same as practical.

We have found that for measurement of the color of some types of paper the use of a pad of paper in the container 60 provides significantly superior results in the measurement of color as compared to using a standard white backing such as ceramic tile. We have also found that using a white pad of paper for backing the sheet often provides good results for various different colors of paper being measured. This is a significant advantage over standard backings which often show wide variability in results when the types of paper vary from one to another.

**Claims**

1. A system for measuring the color of a sample material (12) comprising:

(a) means (20, 22) located on a first side of the sample for illuminating the sample material (12);

(b) sensor means (32) located on the first side of the sample material (12) for receiving light from the sample material;

(c) means for measuring the intensities of predetermined frequencies of light received by the sensor (23); and

(d) backing means (50) on the second side of the sample material for reflecting light which has passed through the sample material (12) back toward the sample material, characterised in that said backing material (50) includes backing material which consists of substantially the same material as the sample material, the backing material has substantially 100% reflectance in all parts of the visible spectrum, and the backing material has substantially the same scattering coefficient as the sample material.

2. A system for measuring the color of a sample material (12) comprising:

(a) means (20, 22) located in a first side of the sample for illuminating the sample material (12);

(b) sensor means (32) located on the first side of the sample material (12) for receiving light from the sample material;

(c) means for measuring the intensities of predetermined frequencies of light received by the sensor (32); and

(d) backing means (50) on the second side of the sample material for reflecting light which has passed through the sample material (12) back toward the sample material, characterised in that said backing means (50) includes backing material which consists of substantially the same material as the sample material, the backing material is of a target color, and the backing material has substantially the same scattering coefficient as the sample material.

3. A system according to Claim 1 or 2 wherein said backing material is paper.

4. A system according to Claim 3 wherein said backing material is a plurality of sheets of paper in the form of a pad (72).

5. A system according to Claim 1 wherein the backing material has substantially the same absorption coefficient and degree of fluorescence as the sample material.

6. A system as claimed in any one of Claims 1 to 5 for measuring the color of a sample material (12) in the form of a sheet, the system comprising means for moving the sheet relatively past the backing means and the sensor means (32) with the sheet material being in spaced apart relationship from said backing means.

7. A process for measuring the color of a sample material (12) comprising:

(a) illuminating the sample material (12) from a first side thereof;

(b) sensing on said first side light received from the sample material (12);

(c) determining the intensities of predetermined frequencies of sensed light; and

(d) reflecting light which has passed through the sample material (12) back toward the sample material with means (50) provided on the second side of the sample material, characterised in that said backing means (50) includes backing material which consists of substantially the same material as the sample material, the backing material has substantially 100% reflectance in all parts of the visible spectrum, and the backing material has substantially the same scattering coefficient as the sample material.

8. A process for measuring the color of a sample material, comprising:

(a) illuminating the sample material (12) from a first side thereof;

(b) sensing on said first side light received from the sample material (12);

(c) determining the intensities of predetermined frequencies of sensed light; and

(d) reflecting light which has passed through the sample material (12) back toward the sample material with means (50) provided on the second side of the sample material, characterised in that said backing means (50) includes backing material which consists of substantially the same material as the sample material, the backing material is of a target color, and the backing material has substantially the same scattering coefficient as the sample material.

9. A process as claimed in Claim 7 or 8 wherein the sample material is a sheet material which moves relatively past the backing in spaced apart relationship thereto.

**Patentansprüche**

1. Anlage zum Messen der Farbe einer Materialprobe (12), umfassend:

(a) eine auf einer ersten Seite der Probe angeordneten Einrichtung (20, 22) zur Beleuchtung der Materialprobe (12);

(b) eine auf der ersten Seite der Materialprobe (12) angeordnete Meßfühlereinrichtung (32) zum Empfangen des von der Materialprobe kommenden Lichtes;

(c) eine Einrichtung zum Messen der Intensität vorbestimmter Frequenzen des vom Meßfühler (32) empfangenen Lichtes; und

(d) eine Rückschichteinrichtung (50) auf der zweiten Seite der Materialprobe zum Reflektieren des durch die Materialprobe (12) kommenden Lichtes zurück gegen die Materialprobe, dadurch gekennzeichnet, daß das Rückschichtmaterial (50) Rückschichtmaterial umfaßt, welches im wesentlichen aus dem gleichen Material wie die Materialprobe besteht, das Rückschichtmaterial im wesentlichen ein 100%iges Reflexionsvermögen in allen Teilen des sichtbaren Spektrums aufweist, und das Rückschichtmaterial im wesentlichen den gleichen Streukoeffizienten wie die Materialprobe aufweist.

2. Anlage zum Messen der Farbe einer Materialprobe (12), umfassend:

(a) eine auf einer ersten Seite der Probe angeordneten Einrichtung (20, 22) zur Beleuchtung der Materialprobe (12);

(b) eine auf der ersten Seite der Materialprobe (12) angeordnete Meßfühlereinrichtung (32) zum Empfangen des von der Materialprobe kommenden Lichtes;

(c) ein Einrichtung zum Messen der Intensität vorbestimmter Frequenzen des vom Meßfühler (32) empfangenen Lichtes; und

(d) eine Rückschichteinrichtung (50) auf der zweiten Seite der Materialprobe zum Reflektieren des durch die Materialprobe (12) kommenden Lichtes zurück gegen die Materialprobe, dadurch gekennzeichnet, daß die Rückschichteinrichtung (50) Rückschichtmaterial umfasst, welches im wesentlichen aus dem gleichen Material wie die Materialprobe besteht, das Rückschichtmaterial eine Sollfarbe hat, und das Rückschichtmaterial im wesentlichen den gleichen Streukoeffizienten wie die Materialprobe aufweist.

3. Anlage nach Anspruch 1 oder 2, wobei das Rückschichtmaterial aus Papier besteht.

4. Anlage nach Anspruch 3, wobei das Rückschichtmaterial aus mehreren Papierbögen in Form eines Blockes (72) besteht.

5. Anlage nach Anspruch 1, wobei das Rückschichtmaterial im wesentlichen den gleichen Absorpionskoeffizienten und Fluoreszenzgrad aufweist wie die Materialprobe.

6. Anlage nach einem der Ansprüche 1 bis 5 zum Messen der Farbe einer Materialprobe (12) in Form eines Bogens, wobei die Anlage eine Einrichtung zum relativen Bewegen des Bogens vorbei an der Rückschichteinrichtung und der Meßfühlereinrichtung (32) umfasst, wobei der Materialbogen von der Rückschichteinrichtung beabstandet ist.

7. Verfahren zum Messen der Farbe einer Materialprobe (12), umfassend:

(a) die Beleuchtung der Materialprobe (12) von einer ersten Seite derselben aus;

(b) die Meßfühlung des von der Materialprobe (12) kommenden Lichtes auf der ersten Seite;

(c) das Bestimmen der Intensität vorbestimmter Frequenzen von durch Fühlung gemessenem Licht; und

(d) die Reflexion von durch die Materialprobe (12) kommendem Licht zurück gegen die Materialprobe mit einer auf der zweiten Seite der Materialprobe vorgesehenen Einrichtung (50), dadurch gekennzeichnet, daß die Rückschichteinrichtung (50) Rückschichtmaterial umfasst, welches im wesentlichen aus dem gleichen Material wie die Materialprobe besteht, das Rückschichtmaterial im wesentlichen ein 100%iges Reflexionsvermögen in allen Teilen des sichtbaren Spektrums aufweist, und das Rückschichtmaterial im wesentlichen den gleichen Streukoeffizienten wie die Materialprobe aufweist.

8. Verfahren zum Messen der Farbe einer Materialprobe (12), umfassend:

(a) die Beleuchtung der Materialprobe (12) von einer ersten Seite derselben aus;

(b) die Meßfühlung des von der Materialprobe (12) kommenden Lichtes auf der ersten Seite;

(c) das Bestimmen der Intensität vorbestimmter Frequenzen von durch Fühlung gemessenem Licht; und

(d) die Reflexion von durch die Materialprobe (12) kommendem Licht zurück gegen die Materialprobe mit einer auf der zweiten Seite der Materialprobe vorgesehenen Einrichtung (50), dadurch gekennzeichnet, daß die Rückschichteinrichtung (50) Rückschichtmaterial umfasst, welches im wesentlichen aus dem gleichen Material wie die Materialprobe besteht, das Rückschichtmaterial eine Sollfarbe hat, und das Rückschichtmaterial im wesentlichen den gleichen Streukoeffizienten wie die Materialprobe aufweist.

9. Verfahren nach Anspruch 7 oder 8, wobei die Materialprobe ein Materialbogen ist, welcher beabstandet von der Rückschicht sich relativ daran vorbeibewegt.

## Revendications

1. Un système pour mesurer la couleur d'un matériau échantillon (12) comprenant:

(a) des moyens (20, 22) disposés sur un premier côté de l'échantillon pour illuminer le matériau échantillon (12);

(b) un moyen à détecteur (32) disposé sur le premier côté du matériau échantillon (12) pour recevoir la lumière en provenance du matériau échantillon;

(c) des moyens pour mesurer les intensités des fréquences prédéterminées de la lumière reçue par le détecteur (32); et

(d) des moyens de support (50) sur le second côté du matériau échantillon pour réfléchir la lumière qui a traversé le matériau échantillon (12) vers l'arrière, en direction du matériau échantillon, caractérisé en ce que la matière de support (50) comporte un matière de support qui est constituée à peu près du même matériau que le matériau échantillon, la matière de support a, à peu près, un facteur de réflexion de 100% dans toutes les parties du spectre visible, et la matière de support a, à peu près, le même coefficient de dispersion que le matériau échantillon.

2. Un système pour mesurer la couleur d'un matériau échantillon (12) comprenant:

(a) des moyens (20, 22) disposés sur un premier côté de l'échantillon pour illuminer le matériau échantillon (12);

(b) un moyen à détecteur (32) disposé sur le premier côté du matériau échantillon (12) pour recevoir la lumière en provenance du matériau échantillon;

(c) des moyens pour mesurer les intensités des fréquences prédéterminées de la lumière reçue par le détecteur (32); et

(d) des moyens de support (50) sur le second côté de matériau échantillon pour réfléchir la lumière qui a traversé le matériau échantillon (12) vers l'arrière, en direction du matériau échantillon, caractérisé en ce que lesdits moyens de support (50) comportent une matière de support qui est constituée à peu près de la même matière que le matériau échantillon, la matière de support est d'une couleur cible, et la matière de support a, à peu près, le même coefficient de dispersion que le matériau échantillon.

3. Un système selon la revendication 1 ou 2, dans lequel ladite matière de support est du papier.

4. Un système selon la revendication 3, dans lequel ladite matière de support est constituée par une pluralité de feuilles de papier, sous la forme d'un bloc (72).

5. Un système selon la revendication 1, dans lequel la matière de support a, à peu près, le même coefficient d'absorption et degré de fluorescence que le matériau échantillon.

6. Un système selon l'une quelconque des revendications 1 à 5, pour mesurer la couleur d'un matériau échantillon (12) sous la forme d'une feuille, le système comprenant des moyens pour déplacer la feuille relativement pour passer les moyens de support et du détecteur (32), le matériau en feuille étant espacé par rapport auxdits moyens de support.

7. Un procédé pour mesurer la couleur d'un matériau échantillon (12) consistant:

(a) à illuminer le matériau échantillon (12) à partir du premier côté de celle-ci;

(b) à détecter sur ledit premier côté la lumière reçue du matériau échantillon (12);

(c) à déterminer les intensités des fréquences prédéterminées de la lumière détectée; et

(d) à réfléchir la lumière qui a traversé le matériau échantillon (12) vers l'arrière, en direction du matériau échantillon à l'aide de moyens (50) prévus sur le second côté du matériau échantillon, caractérisé en ce que lesdits moyens de support (50) comportent une matière de support qui est constituée à peu près du même matériau que le matériau échantillon, la matière de support a, à peu près, un facteur de réflexion de 100%, dans toutes les parties du spectre visible, et la matière de support a, à peu près, le même coefficient de dispersion que le matériau échantillon.

8. Un procédé pour mesurer la couleur d'un matériau échantillon (12) consistant:

(a) à illuminer le matériau échantillon (12) à partir du premier côté de celui-ci;

(b) à détecter sur ledit premier côté la lumière reçue du matériau échantillon (12);

(c) à déterminer les intensités des fréquences prédéterminées de la lumière détectée; et

(d) à réfléchir la lumière qui a traversé le matériau échantillon (12) vers l'arrière, en direction du matériau échantillon à l'aide de moyens (50) prévus sur le second côté du matériau échantillon, caractérisé en ce que lesdits moyens de support (50) comportent une matière de support qui est constituée à peu près du même matériau que le matériau échantillon, la matière de support est d'une couleur cible et la matière support a, à peu près, le même coefficient de dispersion que le matériau échantillon.

9. Un procédé selon la revendication 7 ou 8, dans lequel le matériau échantillon est un matériau en feuille qui se déplace relativement pour passer le support en étant espacé par rapport à celui-ci.

FIG. 1

FIG. 3

FIG. 2